# EUROPEAN PATENT APPLICATION

(11) **EP 4 095 029 A1**
(43) Date of publication of application: **30.11.2022**
(21) Application number: 21743747.4
(22) Date of filing: 18.01.2021
(51) Int. Cl.: B62M 21/00, H02K 7/118, F16D 3/12, F16D 3/66

(54) **ROTATION TRANSMISSION MECHANISM, ROTATION TRANSMISSION COUPLING, MOTOR, AND ELECTRICAL GENERATOR**

(30) Priority: 22.01.2020 JP 2020008608
(71) Applicant: Freepower Innovations Co. Ltd., Yoshimuracho Miyazaki-shi, Miyazaki 880-0841 (JP)
(72) Inventor: HAMAMOTO Yoichiro, Miyazaki-shi, Miyazaki 880-0822 (JP)
(74) Representative: Vossius & Partner Patentanwälte Rechtsanwälte mbB
(86) International application number: PCT/JP2021/001498
(87) International publication number: WO 2021/149643

(57) **Abstract**

First to fourth rotating bodies (12a - 12d) are coaxially and sequentially disposed, the relative rotation amounts of adjacent rotating bodies are regulated by first to third relative rotation regulating means (13a - 13c), the first to fourth rotating bodies (12a - 12d) sequentially start to rotate with delays at the start of an operation, the first to fourth rotating bodies (12a - 12d) integrally rotate finally, and rotation is transmitted from the first rotating body (12a) to the fourth rotating body (12d).

## Description

### Technical Field

The present invention relates to a rotation transmission mechanism, a rotation transmission coupling, a motor, and an electrical generator that can obtain large output by reducing the load at the time of startup.

### Background Art

Vehicles such as bicycles, wheelbarrows, and carts move by rotating their wheels while receiving frictional resistance from the tread. Accordingly, these vehicles need a large driving force (input energy) when starting from a stopped (stationary) state. Assume that such vehicles suddenly start, suddenly accelerate, or climb a hill while carrying heavy cargoes. Assume also that a heavy-weight user rides a bicycle. In such cases, a load (drag) applied to the body of the user increases, and the necessary energy also increases accordingly. Rotating bodies such as propellers and screws, various types of motorized rotating equipment, and the like are driven by motors. As these rotating bodies and equipment increase in size and weight, loads applied to the motors increase. As a consequence, motors with large outputs are required.

On the other hand, Patent Literature 1 filed by the present inventor discloses a human-powered vehicle rotation transmission mechanism including a) an inner rotating member having an outer peripheral convex portion protruding from the outer periphery of a rotating shaft, b) an outer rotating member having a side plate portion pivotally inserted and installed in the rotating shaft, an outer tubular portion installed upright on the outer periphery of the side plate portion, and an inner peripheral convex portion protruding from the side plate portion and/or the outer tubular portion on the inner peripheral side of the outer tubular portion and disposed alternately with respect to the outer peripheral convex portion, and c) an elastic deformation portion placed between the outer peripheral convex portion and the inner peripheral convex portion. Patent Literature 2 discloses an improvement from the mechanism disclosed in patent literature 1. That is, an inner rotating member main body provided with the outer peripheral convex portion of the inner rotating member is formed in a ring shape, and one or a plurality of intermediate rotating members functioning as both the inner rotating member and the outer rotating member are interposed between the inner rotating member and the outer rotating member.

### Citation List

### Patent Literature

Patent Literature 1: WO 2009/054161
Patent Literature 2: Japanese Published Unexamined Patent Application No. 2018-47873

### Summary of Invention

### Technical Problem

The human-powered vehicle rotation transmission mechanism in Patent Literature 1 is configured to make the elastic deformation portion absorb and accumulate an impact energy or excessive input energy generated by a load or the like received from the outside at the time of startup (initial motion) or during traveling so as to greatly reduce a load on the human body and extract and use the accumulated energy as power (rotational force) when the input energy is reduced or interrupted. Accordingly, a human-powered vehicle including this human-powered vehicle rotation transmission mechanism is very convenient to use, which can reduce a burden on the body of the user, easily move on a slope or irregular road, and carry a heavy cargo.

According to Patent Literature 1, however, the outer peripheral convex portion and the inner peripheral convex portion are alternately disposed, the elastic deformation portion is placed between the outer peripheral convex portion and the inner peripheral convex portion, and the range (angle) in which the inner rotating member and the outer rotating member can relatively rotate is limited. For this reason, it is difficult to generate a sufficient acceleration (rotating force) during the period from the start of an operation (from the start of relative rotation between the inner rotating member and the outer rotating member) to the start of a compression of the elastic deformation portion. Accordingly, when driving a large-sized rotating body, rotating equipment, or the like by a motor, even if the rotation transmission mechanism in Patent Literature 1 is applied to their rotating shafts (driving shafts), a large load is applied to the motor immediately after the start of rotation (driving), and the load at the time of startup cannot be sufficiently reduced, resulting in poor acceleration performance and difficulty in obtaining large output, which has limited the application of this mechanism.

According to Patent Literature 2, one or a plurality of intermediate rotating members, each functioning as both the inner rotating member and the outer rotating member, are interposed between the inner rotating member and the outer rotating member. This increases the amount of elastic deformation portions and hence can increase a compression (elastic) energy accumulated in the overall elastic deformation portions. However, since the elastic deformation portion is filled between the outer peripheral convex portion and the inner peripheral convex portion and the inner rotating member and the intermediate rotating member rotate while always compressing the elastic deformation portions, resulting in a large load at the time of startup, lacking in acceleration performance, and difficulty in obtaining large output as compared with Patent Literature 1.

The present invention has been made in consideration of such situations and has as its object to provide a rotation transmission mechanism, a rotation transmission coupling, a motor, and an electrical generator which can increase the output by greatly reducing the load at the time of startup and increasing the acceleration instead of accumulating part of input energy in the elastic body and using the energy as rotational energy and have excellent operation stability.

### Solution to Problem

In a rotation transmission mechanism according to a first invention conforming to the object, first to n-th rotating bodies are coaxially and sequentially disposed, relative rotation amounts of adjacent rotating bodies are regulated by first to (n - 1)th relative rotation regulating means, the first to n-th rotating bodies sequentially start to rotate with delays at a start of operation, the first to n-th rotating bodies integrally rotate finally, and rotation is transmitted from the first rotating body to the n-th rotating body, where n is an integer not less than two, preferably not less than three.

In the rotation transmission mechanism according to the first invention, the i-th relative rotation regulating means has elasticity and/or flexibility and includes a plurality of coupling members that couple an axial one side of the i-th rotating body to an axial other side of the (i + 1)th rotating body, and both end portions of each of the coupling members can be located on circumferences with the same diameter respectively centered on axial centers of the i-th rotating body and the (i + 1)th rotating body, where i is an integer of 1 to n - 1 (the same applies hereinafter).

In the rotation transmission mechanism according to the first invention, the coupling member is preferably a coil spring.

In the rotation transmission mechanism according to the first invention, the i-th relative rotation regulating means can include an engaging shaft protruding to an axial one side of the i-th rotating body and an engaging concave portion which opens to an axial other side of the (i + 1)th rotating body and curves in an arc shape centered on a axial center of the (i + 1)th rotating body and through which the engaging shaft is inserted.

The rotation transmission mechanism according to the first invention may further include rotation auxiliary elastic members which are respectively accommodated in one side and the other side of the engaging concave portion of the (i + 1)th rotating body in a circumferential direction, are compressed accompanying relative rotation of the i-th rotating body and the (i + 1)th rotating body, and make the i-th rotating body and the (i + 1)th rotating body relatively rotate and return to a positional relationship in an initial state with repulsive force at an end of an operation.

In the rotation transmission mechanism according to the first invention, the i-th relative rotation regulating means may include an engaging shaft protruding to an axial one side of the i-th rotating body and an engaging hole portion which penetrates through the (i + 1)th rotating body in an axial direction and curves in an arc shape centered on a axial center of the (i + 1)th rotating body and through which the engaging shaft is inserted.

In this case, a large-diameter portion can be formed on one side of the engaging hole portion, and a large-diameter engaging portion can be formed on one side of the engaging shaft so as to prevent the engaging shaft from coming off from the other side of the engaging hole portion.

In the rotation transmission mechanism according to the first invention, the i-th relative rotation regulating means may include a rotating shaft protruding to an axial one side of the i-th rotating body, a projection portion formed on an outer periphery of the rotating shaft, a shaft insertion portion which is formed on an axial other side of the (i + 1)th rotating body and in which the rotating shaft is loosely fitted, and a rotation regulating concave portion which is formed in a notch shape in an outer periphery of the shaft insertion portion and engages with the projection portion to regulate a rotatable range of the projection portion.

In the rotation transmission mechanism according to the first invention, the i-th relative rotation regulating means may include a drive-side projection protruding to an axial one side of the i-th rotating body and a driven-side projection protruding to an axial other side of the (i + 1)th rotating body and may regulate a relative rotation amount by causing the drive-side projection to come into contact with the driven-side projection while the i-th rotating body and the (i + 1)th rotating body relatively rotate.

The rotation transmission mechanism according to the first invention can include a plurality of rotation auxiliary coupling members which have elasticity and/or flexibility, couple the axial one side of the i-th rotating body to the axial other side of the (i + 1)th rotating body, deform from the initial state accompanying relative rotation of the i-th rotating body and the (i + 1)th rotating body at the start of an operation, and restore to the initial state at the end of the operation, thereby making the i-th rotating body and the (i + 1)th rotating body relatively rotate and return to the positional relationship in the initial state.

The rotation transmission mechanism according to the first invention may include a plurality of rotation auxiliary coupling members which have flexibility, couple the drive-side projection of the i-th rotating body to the axial center side of the axial other side of the (i + 1)th rotating body, deform from the initial state accompanying relative rotation of the i-th rotating body and the (i + 1)th rotating body at the start of an operation, and restore to the initial state at the end of the operation, thereby making the i-th rotating body and the (i + 1)th rotating body relatively rotate and return to the positional relationship in the initial state.

In the rotation transmission mechanism according to the first invention, the i-th rotating body and the (i + 1)th rotating body may be coupled to each other so as to be relatively rotatable and slidable in an axial direction by, in addition to the 1 to (n - 1)th relative rotation regulating means, fitting between a fitting convex portion or a fitting concave portion formed on a axial center on an axial one side of the i-th rotating body and a fitting concave portion or a fitting convex portion formed on a axial center on an axial other side of the (i + 1)th rotating body.

The rotation transmission mechanism according to the first invention preferably includes a support shaft which penetrates through axial centers of the first to n-th rotating bodies and supports the first to n-th rotating bodies so as to make the first to n-th rotating bodies reciprocally rotatable and slidable in an axial direction.

A rotation transmission coupling according to a second invention conforming to the object is a rotation transmission coupling that couples between an input portion and an output portion and transmits rotation input from the input portion to the output portion. The rotation transmission coupling includes a rotation transmission mechanism according to the first invention, a casing incorporating the rotation transmission mechanism, a first outer coupling shaft coupled to an axial other side of the first rotating body, reciprocally rotatably supported by the casing, and detachably connected to a drive shaft of the input portion, and a second outer coupling shaft coupled to an axial one side of the n-th rotating body, reciprocally rotatably supported by the casing, and detachably connected to a connection shaft of the output portion.

The rotation transmission coupling according to the second invention may include one or both of an input-side auxiliary rotation transmission portion which connects between the drive shaft and the first outer coupling shaft and elastically deforms upon rotation of the drive shaft to transmit the rotation of the drive shaft to the first outer coupling shaft with a delay and an output-side auxiliary rotation transmission portion which connects between the second outer coupling shaft and the connection shaft and elastically deforms upon rotation of the second outer coupling shaft to transmit the rotation of the second outer shaft to the connection shaft with a delay.

A motor according to a third invention conforming to the object includes a rotor including a rotation transmission mechanism according to the first invention, the motor transmitting rotation from the first rotating body or the n-th rotating body to the n-th rotating body or the first rotating body and outputting the rotation from an output shaft coupled to the n-th rotating body or the first rotating body.

An electrical generator according to a fourth invention conforming to the object includes a rotor including a rotation transmission mechanism according to the first invention, the electrical generator generating electricity by inputting rotation from an input shaft coupled to the first or n-th rotating body and transmitting the rotation from the first or n-th rotating body to the n-th or first rotating body.

### Advantageous Effects of Invention

According to the rotation transmission mechanism according to the first invention, the first to n-th rotating bodies sequentially start to rotate with delays at the start of an operation and finally integrally rotate, thereby greatly reducing the load at the time of startup. While the first to n-th rotating bodies sequentially transmit rotation, the acceleration is increased, and large output can be obtained. Therefore, coupling the input side (a drive source such as a motor) to the output side (an output portion as a rotating body such as a propeller or screw, any type of motorized rotating equipment, or the like) through the rotation transmission mechanism. This makes it possible to drive, for example, a large rotating body or rotating equipment even with small input energy at the time of startup. This can reduce the size of the motor or the like as a drive source and achieve excellent energy saving performance. In addition, even if the load increases upon application of resistance such as external force to the output side, it is not directly transmitted to the input side, and the impact is alleviated. This can prevent the drive source on the input side from being broken. Accordingly, this mechanism can also function as a safety device.

The rotation transmission coupling according to the second invention is configured such that the first and second outer coupling shafts coupled to the first and n-th rotating bodies according to the first invention are easily connected to the input portion and the output portion, respectively. This makes it possible to efficiently transmit rotational energy.

Having the rotor including the rotation transmission mechanism according to the first invention enables the motor according to the third invention to greatly reduce the load at the time of startup, which makes it difficult for the motor to be affected by input variation and external load variation, stabilizes the rotation of the motor, and can efficiently extract rotational energy from the output shaft.

The electrical generator according to the fourth invention has the rotor including the rotation transmission mechanism according to the first invention, inputs rotation from the input shaft coupled to the first or the n-th rotating body, and transmits the rotation from the first or n-th rotating body to the n-th or first rotating body, thus generating electricity. This makes it possible to efficiently generate electricity by increasing the kinetic energy during the transmission of rotation while greatly reducing the load at the time of startup, thereby extracting large output (electric energy).

### Brief Description of Drawings

Fig. 1 is a front view of a rotation transmission coupling according to a first embodiment of the present invention.
Fig. 2 is a plan view showing a rotation transmission mechanism inside the rotation transmission coupling.
Fig. 3 is a cross-sectional view taken along a line A-A in Fig. 1.
Figs. 4(A) to 4(D) are side views each showing the axial one side and the axial other side of a corresponding one of first to fourth rotating bodies constituting the rotation transmission mechanism of the rotation transmission coupling.
Fig. 5 is a plan view showing the operation of the rotation transmission mechanism inside the rotation transmission coupling.
Fig. 6(A) is a cross-sectional view taken along a line B-B in Fig. 2, and Fig. 6(B) is a cross-sectional view taken along a line C-C in Fig. 5.
Fig. 7 is a plan view with a main-part cross section showing a first modification of the rotation transmission coupling.
Fig. 8 is a plan view with a main-part cross section showing a second modification of the rotation transmission coupling.

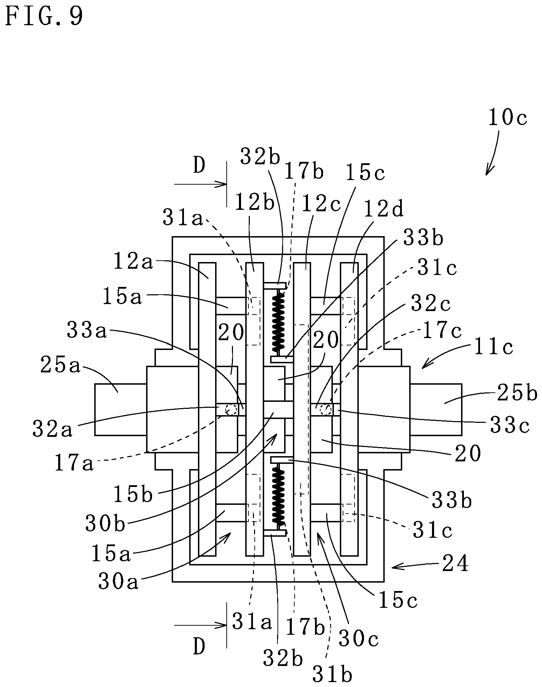

Fig. 9 is a plan view showing a rotation transmission mechanism of a third modification of the rotation transmission coupling.
Fig. 10 is a cross-sectional view taken along a line D-D in Fig. 9.
Fig. 11 is a plan view showing a rotation transmission mechanism of a fourth modification of the rotation transmission coupling.
Fig. 12(A) is a cross-sectional view taken along a line E-E in Fig. 11, and Fig. 12(B) is a cross-sectional view showing the operation of the rotation transmission mechanism inside the rotation transmission coupling.
Fig. 13 is a plan view showing a rotation transmission mechanism inside a rotation transmission coupling according to a second embodiment of the present invention.
Fig. 14 is a plan view showing the operation of the rotation transmission mechanism inside the rotation transmission coupling.
Fig. 15 is a plan view showing a rotation transmission mechanism inside a rotation transmission coupling according to a third embodiment of the present invention.
Fig. 16 is a cross-sectional view taken along a line F-F in Fig. 15.
Fig. 17 is a plan view showing a rotation transmission mechanism of a modification of the rotation transmission coupling.
Fig. 18 is a rotation transmission mechanism inside a rotation transmission coupling according to a fourth embodiment of the present invention.
Fig. 19 is a cross-sectional view taken along a line G-G in Fig. 18.
Fig. 20 is a cross-sectional view showing the operation of the rotation transmission mechanism inside the rotation transmission coupling.
Fig. 21 is a plan view showing the inside of a motor according to a fifth embodiment of the present invention.
Fig. 22 is a plan view with a main-part cross section showing an internal structure of the motor.
Fig. 23 is a cross-sectional view taken along a line H-H in Fig. 21.

### Description of Embodiments

Embodiments embodying the present invention will now be described with reference to the accompanying drawings, thus aiding understanding of the present invention.

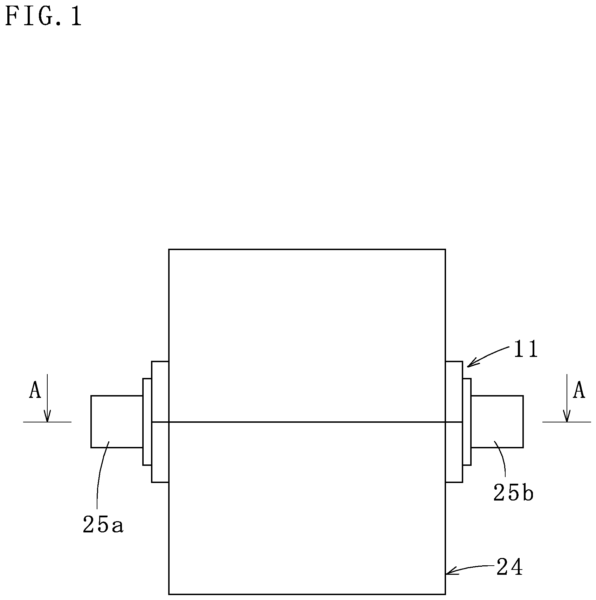

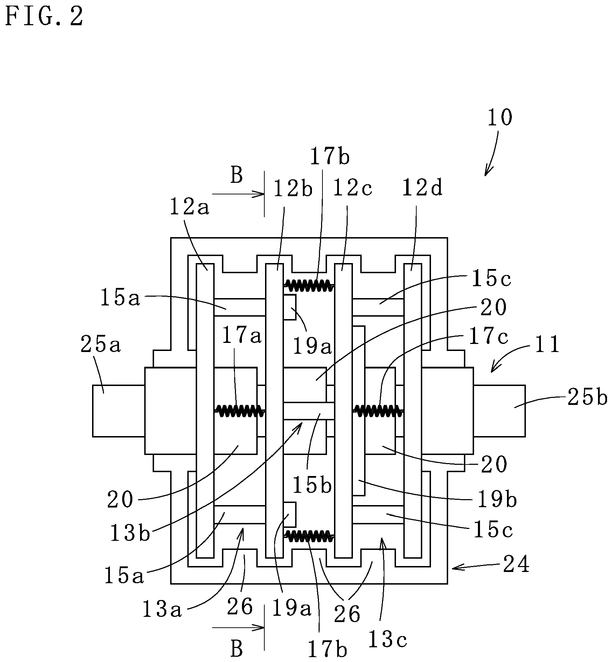

A rotation transmission coupling 10 according to the first embodiment of the present invention and a rotation transmission mechanism 11 used therefor will be described with reference to Figs. 1 to 6. The rotation transmission coupling 10 shown in Figs. 2, 3, and 5 couples between an input portion (for example, a driving means such as a motor or a manual rotating handle) and an output portion (for example, a driven body such as a rotating body such as a propeller or screw or any type of rotating equipment) to transmit rotation input from the input portion to the output portion. Incorporating the rotation transmission mechanism 11 enables the rotation transmission coupling 10 to increase the output by greatly reducing the load at the time of startup in rotation transmission and increasing the acceleration, thereby stabilizing a rotation transmitting operation.

As shown in Figs. 2, 3, and 5, the rotation transmission mechanism 11 has first to fourth rotating bodies 12a to 12d coaxially disposed in the axial direction in the order named. The relative rotation amounts of adjacent rotating bodies are respectively regulated by first to third relative rotation regulating means 13a to 13c.

In this case, as shown in Figs. 2, 3, 4(A) to 4(D), and 5, the first to third relative rotation regulating means 13a to 13c respectively include two each of engaging shafts 15a to 15c protruding to the axial one side of each of the first to third rotating bodies 12a to 12c and two each of engaging hole portions 16a to 16c which respectively penetrate through the second to fourth rotating bodies 12b to 12d in the axial direction and curve in an arc shape centered on the axial centers of the second to fourth rotating bodies 12b to 12d and through which the engaging shafts 15a to 15c are respectively inserted.

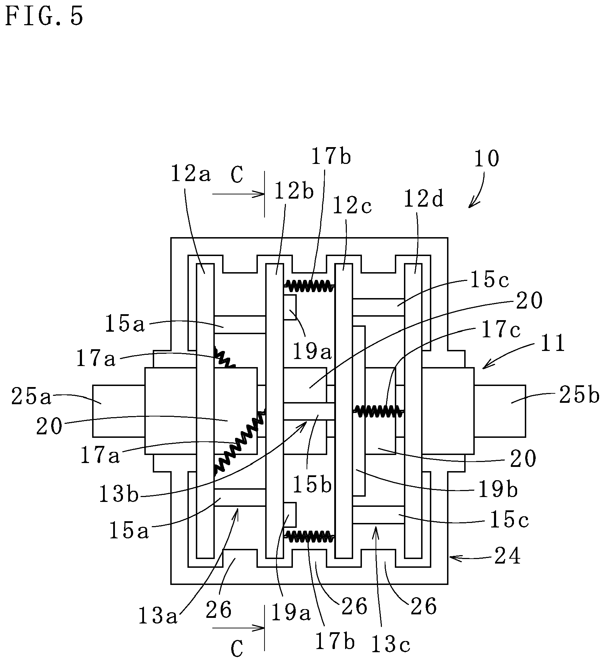

As shown in Figs. 2, 3, and 5, the rotation transmission mechanism 11 also includes rotation auxiliary coupling members 17a to 17c using a plurality (two each in this case) of coil springs respectively coupling the axial one side of each of the first to third rotating bodies 12a to 12c to the axial other side of a corresponding one of the second to fourth rotating bodies 12b to 12d. Both end portions of each of the rotation auxiliary coupling members 17a to 17c are located on circumferences with the same diameter respectively centered on the axial centers of the first to third rotating bodies 12a to 12c and the second to fourth rotating bodies 12b to 12d. The rotation auxiliary coupling members 17a to 17c deform (extend) from an initial state accompanying a relative rotation of the first to third rotating bodies 12a to 12c and the second to fourth rotating bodies 12b to 12d at the time of startup (see Fig. 5) and restore (contract) to the initial state (see Fig. 2) at the end of the operation, thereby relatively rotating the first to third rotating bodies 12a to 12c and the second to fourth rotating bodies 12b to 12d and returning them to the initial-state positional relationship. This makes the rotation transmission mechanism 11 automatically return to the initial state at the end of the operation, and hence makes it unnecessary to perform an additional operation of making the rotation transmission mechanism 11 return to the initial state by, for example, reversing the second to fourth rotating bodies 12b to 12d. Accordingly, even if the rotation transmission mechanism 11 is repeatedly (intermittently) used at short intervals, stable effects can be obtained.

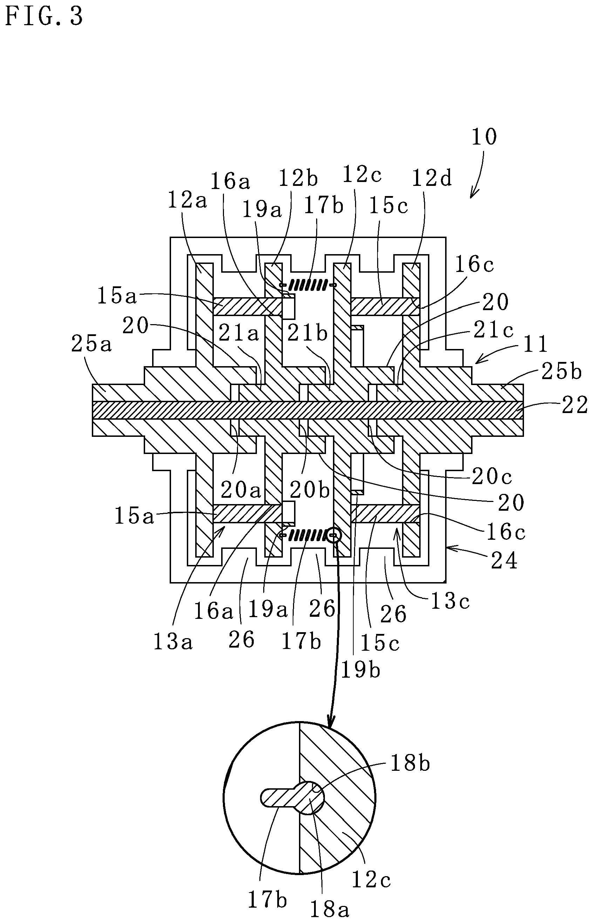

As shown in Fig. 3, both end portions of each of the rotation auxiliary coupling members 17a to 17c are each formed into a spherical universal coupling 18a, which is pivotally fitted in a fitted portion 18b of each of the first to fourth rotating bodies 12a to 12d. This makes the positions of the fitted portions 18b move accompanying the rotation of the first to fourth rotating bodies 12a to 12d. Accordingly, when the rotation auxiliary coupling members 17a to 17c extend or contract, inclinations of the rotation auxiliary coupling members 17a to 17c change following the movement of the fitted portions 18b (see Fig. 5). This makes it possible to smoothly rotate the first to fourth rotating bodies 12a to 12d without twisting the rotation auxiliary coupling members 17a to 17c. In addition, as shown in Figs. 2, 3, 4(B), 4(C), and 5, guard portions 19a and 19b are formed along the outer peripheries of the engaging hole portions 16a and 16b on one side of each of the second and third rotating bodies 12b and 12c. In this manner, providing the guard portions 19a and 19b at a portion where the engaging hole portions 16a and 16b and the rotation auxiliary coupling members 17b and 17c are arranged near each other so as to cover the outer peripheries of the engaging hole portions 16a and 16b can prevent interference between the engaging shafts 15a and 15b inserted through the engaging hole portions 16a and 16b and the rotation auxiliary coupling members 17b and 17c. Note that the guard portions 19a and 19b may be omitted by regulating the moving (sliding) amounts of the first to fourth rotating bodies 12a to 12d in the axial direction so as not to make each of the engaging shafts 15a and 15b protrude from a corresponding one of the engaging hole portions 16a and 16b to one side of a corresponding one of the second and third rotating bodies 12b and 12c.

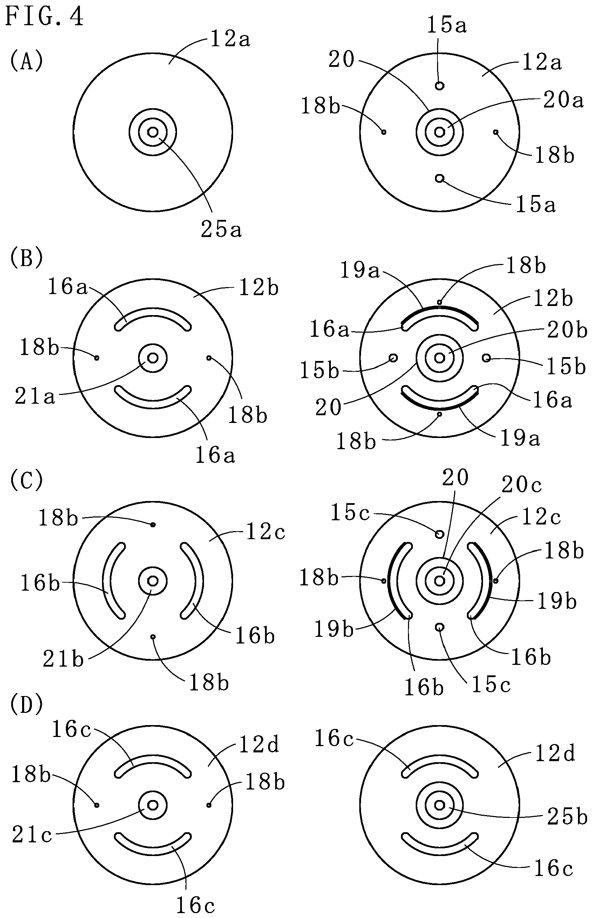

As shown in Figs. 3 and 4(A) to 4(D), the rotation transmission mechanism 11 is configured such that, in addition to the first to third relative rotation regulating means 13a to 13c, fitting concave portions 20a to 20c formed in the axial centers of shaft portions 20, each protruding to the axial one side of a corresponding one of the first to third rotating bodies 12a to 12c, are fitted on fitting convex portions 21a to 21c formed on the axial centers of the second to fourth rotating bodies 12b to 12d each on the axial other side, thereby coupling the first to third rotating bodies 12a to 12c to the second to fourth rotating bodies 12b to 12d so as to allow them to relatively rotate and slide in the axial direction. This makes the axial centers of the first to fourth rotating bodies 12a to 12d coincide with each other. In addition, when the rotation auxiliary coupling members 17a to 17c extend or contract accompanying the relative rotation of the first to fourth rotating bodies 12a to 12d, the first to fourth rotating bodies 12a to 12d are made to slide in the axial direction, thereby smoothly rotating the rotating bodies while adjusting the intervals between the adjacent rotating bodies.

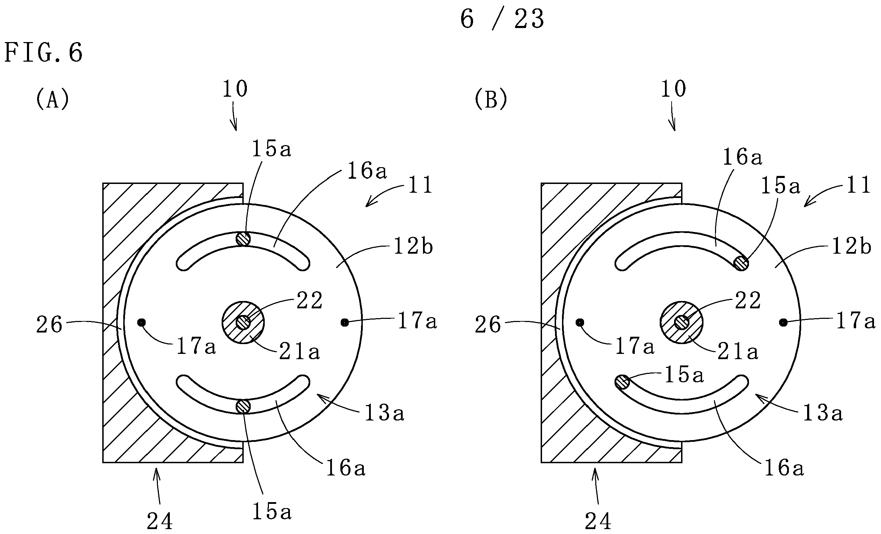

Further, as shown in Figs. 3, 6(A), and 6(B), the rotation transmission mechanism 11 includes a support shaft 22 that penetrates through the axial centers of the first to fourth rotating bodies 12a to 12d and supports the first to fourth rotating bodies 12a to 12d so as to allow them to reciprocally rotate and slide in the axial direction. Supporting the axial centers of the first to fourth rotating bodies 12a to 12d with the one (common) support shaft 22 increases the reliability and stability of the rotating operation of the first to fourth rotating bodies 12a to 12d. In addition, when the first to fourth rotating bodies 12a to 12d greatly slide in the axial direction and the fitting concave portions 20a to 20c are disengaged from the fitting convex portions 21a to 21c, the first to fourth rotating bodies 12a to 12d can be coaxially held by the support shaft 22. That is, the rotation transmission mechanism 11 is excellent in operation stability.

The operation of the rotation transmission mechanism 11 will be described below.

When the first rotating body 12a rotates (clockwise as viewed from the axial other side of the first rotating body 12a in this case) from the initial state in Figs. 2 and 6(A), each engaging shaft 15a of the first relative rotation regulating means 13a moves along a corresponding one of the engaging hole portions 16a of the second rotating body 12b. As shown in Fig. 5, the rotation auxiliary coupling member 17a then extends, and the first rotating body 12a and the second rotating body 12b relatively rotate. As shown in Fig. 6(B), each engaging shaft 15a comes into contact with an end portion of a corresponding one of the engaging hole portions 16a on the side in the traveling direction to regulate the relative rotation, thereby making the first rotating body 12a and the second rotating body 12b start to integrally rotate. Subsequently, in the same manner, owing to the action of the second and third relative rotation regulating means 13b to 13c, the third and fourth rotating bodies 12c and 12d sequentially start to rotate with delays. Finally, the first to fourth rotating bodies 12a to 12d integrally rotate to transmit rotation from the first rotating body 12a to the fourth rotating body 12d.

As shown in Figs. 6(A) and 6(B), before rotation is transmitted from the first rotating body 12a to the second rotating body 12b (the first rotating body 12a and the second rotating body 12b start to integrally rotate after the first rotating body 12a starts to rotate), the first rotating body 12a rotates through only about 45 degrees, whereas before rotation is transmitted from the first rotating body 12a to the fourth rotating body 12d, the first rotating body 12a rotates through about 135 degrees without receiving a large load. In this manner, increasing the number of rotating bodies disposed in series can increase the relative rotation amount (rotation angle) and rotational speed of the rotating body on the input end side before rotation is transmitted from the rotating body on the input end side to the rotating body on the output end side. In addition, gradually increasing the number (mass) of rotating bodies that rotate until rotation is transmitted from the rotating body on the input end side to the rotating body on the output end side increases the rotational energy (kinetic energy) and hence can obtain large output while reducing the load at the time of startup.

As shown in Figs. 1, 2, 3, 5, 6(A), and 6(B), the rotation transmission coupling 10 includes a casing 24 incorporating the rotation transmission mechanism 11, a first outer coupling shaft 25a coupled to the axial other side of the first rotating body 12a and reciprocally rotatably supported by the casing 24, and a second outer coupling shaft 25b coupled to the axial one side of the fourth rotating body 12d and reciprocally rotatably supported by the casing 24. The first outer coupling shaft 25a is detachably connected to the driving shaft (not shown) of the input portion, and the second outer coupling shaft 25b is detachably connected to the connection shaft (not shown) of the output portion. This makes it possible to easily couple a driving means such as a motor, a manual rotating handle, or the like serving as the input portion to a driven body such as a rotating body such as a propeller or screw or any type of rotating equipment serving as the output portion through the rotation transmission coupling 10. It is then possible to efficiently transmit rotational energy from the first outer coupling shaft 25a as the input side to the second outer coupling shaft 25b as the output side. Coupling the driving means (input portion) to the driven body (output portion) through the rotation transmission coupling 10 instead of directly coupling them can obtain large output while reducing the load at the time of startup. This makes it possible to drive (rotate) the large driven body with a small driving means. In addition, excellent energy saving performance can be achieved. Note that providing ridge portions 26 in correspondence with the positions of the first to fourth rotating bodies 12a to 12d (between the adjacent rotating bodies) inside the casing 24 can regulate the sliding amounts of the first to fourth rotating bodies 12a to 12d in the axial direction. Note that since the sliding amounts of the first to fourth rotating bodies 12a to 12d in the axial direction are also regulated by the rotation auxiliary coupling members 17a to 17c, the fitting concave portions 20a to 20c, and the fitting convex portions 21a to 21c, the ridge portions 26 may be omitted. Alternatively, instead of forming ridge portions on the entire inner periphery of the casing, a plurality of ridge portions may be intermittently formed or a plurality of projections may be formed at necessary portions.

In this embodiment, two each of the engaging shafts 15a to 15c and two each of the engaging hole portions 16a to 16c are arranged as the first to third relative rotation regulating means 13a to 13c at equal angular intervals (180 degrees) in consideration of operation stability. However, the numbers and locations of the engaging shafts and the engaging hole portions of the respective relative rotation regulating means can be selected as appropriate. For example, each relative rotation regulating means may include only one each of engaging shafts and engaging hole portions or three or more each of them. When each relative rotation regulating means includes two or more each of engaging shafts and engaging hole portions, they may not be disposed at equal angular intervals. Note that the engaging shafts of adjacent relative rotation regulating means are preferably disposed so as to be shifted in phase in the circumferential direction in the initial state. In this embodiment, the engaging shafts are disposed such that the phases are shifted from each other by 90 degrees. However, this phase difference can be selected as appropriate in accordance with the number of rotating bodies and the number of engaging shafts of each relative rotation regulating means. In addition, the numbers of engaging shafts and their locations of the respective relative rotation regulating means may be the same or different, and all the phase differences need not be uniform (the same). Furthermore, the phases of the engaging shafts of the adjacent relative rotation regulating means may be disposed coaxially without being shifted.

The number and locations of rotation auxiliary coupling members can be selected as appropriate. The number of rotation auxiliary coupling members may be the same or different from the number of the engaging shafts of each relative rotation regulating means. This embodiment uses coil springs having elasticity and flexibility as rotation auxiliary coupling members. However, rotation auxiliary coupling members to be used may be any members having elasticity and/or flexibility and having actions and effects that smoothly rotate the first to fourth rotating bodies. For example, it is possible to use a rod spring that has flexibility and deforms so as to twist accompanying the relative rotation of adjacent rotating bodies. Note that a coupling method can be selected as appropriate for both end portions of a rotation auxiliary coupling member and a rotating body. For example, both end portions of the rotation auxiliary coupling member may be coupled to the rotating body by forming annular coupling portions (coupling rings) or hooks on both end portions of the rotation auxiliary coupling member and hooking them on hooks or coupling rings attached to the rotating body.

In addition, this embodiment uses the structure in which the adjacent rotating bodies are coupled with the fitting concave portions 20a to 20c and the fitting convex portions 21a to 21c, and all the rotating bodies 12a to 12d are supported (coupled) by the support shaft 22. However, the embodiment may employ a structure in which the support shaft may be omitted, and the adjacent rotating bodies are coupled with only the fitting concave portions and the fitting convex portions or a structure in which the fitting concave portions and the fitting convex portions of the respective rotating bodies are omitted, and all the rotating bodies are supported (coupled) by only the support shaft.

Modifications of the rotation transmission coupling (rotation transmission mechanism) will be described next. Note that the same reference numerals and symbols denote parts similar to those in the first embodiment, and a description thereof will be omitted.

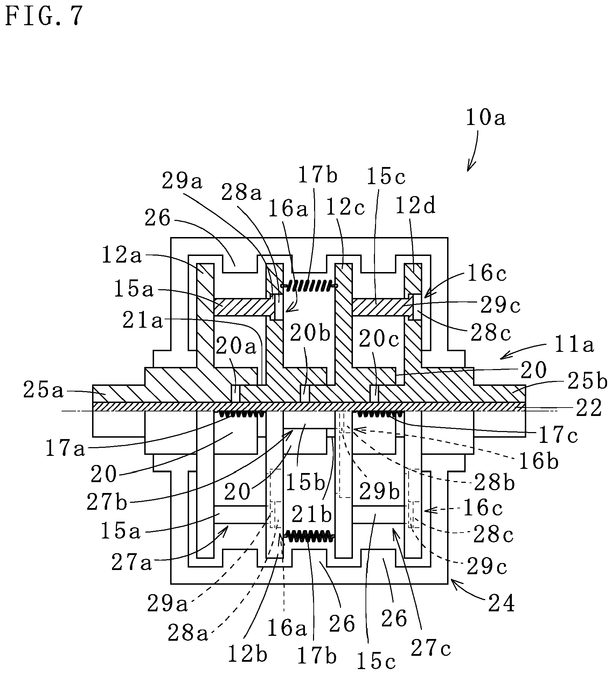

A rotation transmission mechanism 11a used for a rotation transmission coupling 10a according to the first modification shown in Fig. 7 differs from the rotation transmission mechanism 11 in that each of large-diameter portions 28a to 28c is formed on one side of a corresponding one of the engaging hole portions 16a to 16c of first to third relative rotation regulating means 27a to 27c, and each of large-diameter engaging portions 29a to 29c is formed on one side of a corresponding one of the engaging shafts 15a to 15c. This makes it possible to regulate the sliding amounts of the first to fourth rotating bodies 12a to 12d in the axial direction and reliably prevent the intervals between the adjacent rotating bodies from increasing to a predetermined amount or more.

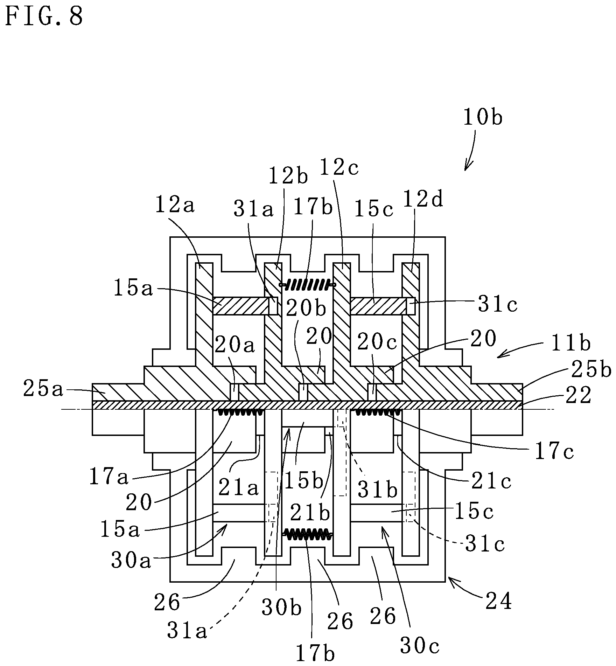

A rotation transmission mechanism 11b used for a rotation transmission coupling 10b according to the second modification shown in Fig. 8 differs from the rotation transmission mechanism 11 in that the rotation transmission mechanism includes, as first to third relative rotation regulating means 30a to 30c, engaging concave portions 31a to 31c each of which opens to the axial other side of a corresponding one of the second to fourth rotating bodies 12b to 12d and curves in an arc shape centered on the axial center of a corresponding one of the second to fourth rotating bodies 12b to 12d and through which the engaging shafts 15a to 15c are inserted. Having the engaging concave portions 31a to 31c instead of the engaging hole portions 16a to 16c of the first to third relative rotation regulating means 13a to 13c of the rotation transmission mechanism 11 can regulate the sliding movements of the first to fourth rotating bodies 12a to 12d in the axial direction. In addition, even if the first to fourth rotating bodies 12a to 12d slide in the axial direction, each of the engaging shafts 15a to 15c does not protrude from one side of a corresponding one of the second to fourth rotating bodies 12b to 12d. This can eliminate the need to use any guard portions.

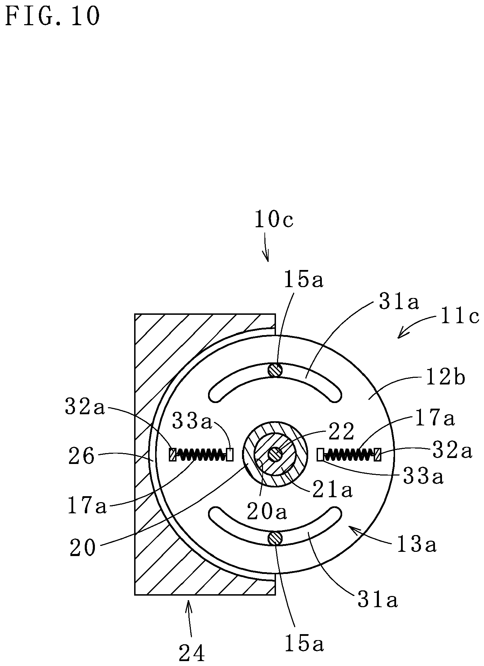

In the rotation transmission mechanisms 11, 11a, and 11b used for the rotation transmission couplings 10, 10a, and 10b, the rotation auxiliary coupling members 17a to 17c using coil springs are disposed along (horizontally) the axial direction of the first to fourth rotating bodies 12a to 12d. However, the rotation auxiliary coupling members 17a to 17c may be disposed so as to be inclined as appropriate within the ranges in which they do not interfere with other parts of the first to fourth rotating bodies 12a to 12d. As in a rotation transmission mechanism 11c used for a rotation transmission coupling 10c according to the third modification shown in Fig. 10, the rotation auxiliary coupling members 17a to 17c using the coil springs may be disposed along (radially) the radius direction of the first to fourth rotating bodies 12a to 12d. In this case, the intervals between the adjacent rotating bodies can be reduced and the rotation transmission mechanism 11c (rotation transmission coupling 10c) can be made compact by using a structure in which the rotation auxiliary coupling members 17a to 17c couple between coupling projections 32a to 32c each provided on one side of a corresponding one of the first to third rotating bodies 12a to 12c and coupling projections 33a to 33c each provided on the other side of a corresponding one of the second to third rotating bodies 12b to 12d. The number of such rotation auxiliary coupling members can be selected as appropriate. In addition, leaf springs may be used instead of the coil springs for the rotation auxiliary coupling members.

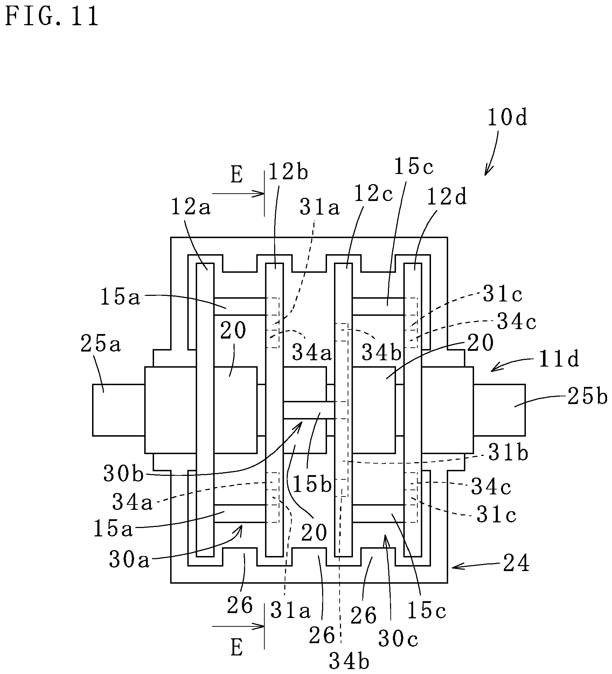

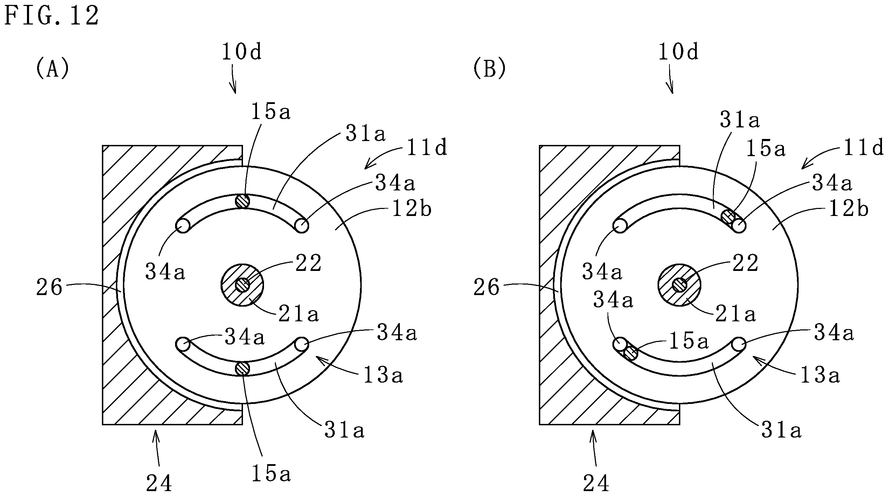

A rotation transmission mechanism 11d used for a rotation transmission coupling 10d according to the fourth modification shown in Figs. 11, 12(A), and 12(B) differs from the rotation transmission mechanism 11b in that the rotation transmission mechanism includes, instead of the rotation auxiliary coupling members 17a to 17c using the coil springs, rotation auxiliary elastic members 34a to 34c which are respectively accommodated in one sides and the other sides of the engaging concave portions 31a to 31c of the second to fourth rotating bodies 12b to 12d in the circumferential direction, contract accompanying the relative rotation of the first to third rotating bodies 12a to 12c and the second to fourth rotating bodies 12b to 12d, and return the first to third rotating bodies 12a to 12c and the second to fourth rotating bodies 12b to 12d to the positional relationship in the initial state by relatively rotating them with repulsive force at the time of the operation. As a rotation auxiliary elastic member, elastomer is preferably used, and hence thermal plastic elastomer is suitably used. However, it is possible to use a synthetic rubber such as butadiene rubber, urethane rubber, or silicone rubber. Each rotation auxiliary elastic member preferably has a spherical or cylindrical shape. However, the shape is not limited to these. In addition, the repulsive force can also be increased by accommodating a plurality of rotation auxiliary elastic members on one sides and the other sides of the engaging concave portions in the circumferential direction, and the elastic moduli and the numbers of rotation auxiliary elastic members accommodated in the engaging concave portions of the respective rotating bodies may be the same or different. In particular, it is possible to reliably absorb a load such as external force applied from the output side and effectively prevent its impact from being transmitted to the input side by increasing the elastic modulus of the rotation auxiliary elastic member accommodated in the engaging concave portion of the rotating body closest to the output side more than the elastic modulus of each of the rotation auxiliary elastic members accommodated in the engaging concave portions of the other rotating bodies or by increasing the number of rotation auxiliary elastic members accommodated in the engaging concave portions of the rotating body closest to the output side more than the number of rotation auxiliary elastic members accommodated in the engaging concave portions of the other rotating bodies. Note that this rotation auxiliary elastic member can be used together with the rotation auxiliary coupling member using the coil spring described above.

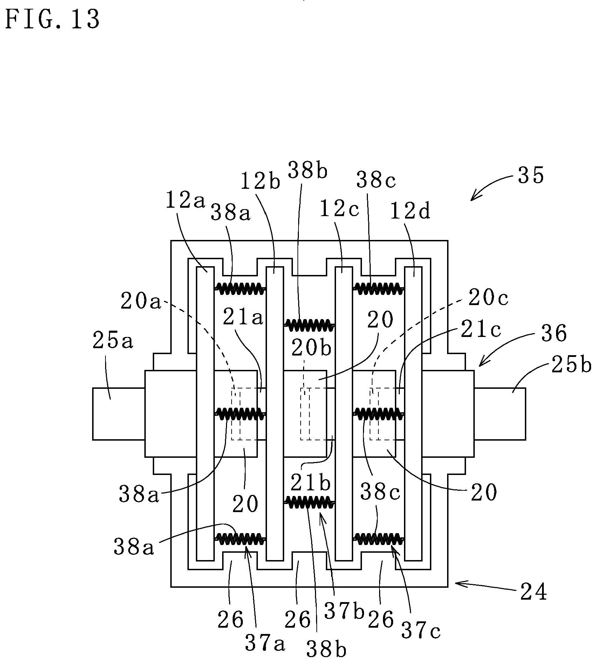

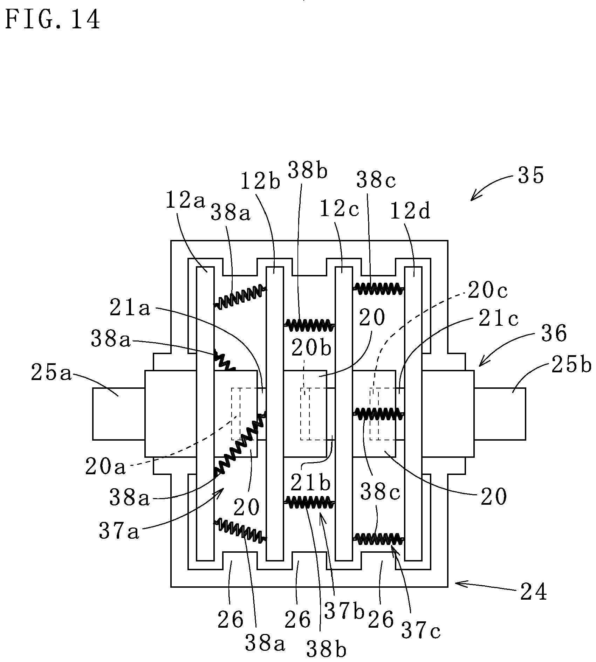

A rotation transmission coupling 35 according to the second embodiment of the present invention and a rotation transmission mechanism 36 used therefor will be described next with reference to Figs. 13 and 14. Note that the same reference numerals and symbols denote parts similar to those in the first embodiment, and a description thereof will be omitted.

The rotation transmission mechanism 36 used for the rotation transmission coupling 35 shown in Figs. 13 and 14 differs from the rotation transmission mechanism 11 in that first to third relative rotation regulating means 37a to 37c include coupling members 38a to 38c using a plurality (four in this case) of coil springs that couple the axial one side of each of first to third rotating bodies 12a to 12c to the axial other side of a corresponding one of second to fourth rotating bodies 12b to 12d. Both end portions of each of the coupling members 38a to 38c are located on circumferences with the same diameter respectively centered on the axial centers of the first to third rotating bodies 12a to 12c and the second to fourth rotating bodies 12b to 12d.

Note that the structure configured to couple both end portions of each of the coupling members 38a to 38c to the first to fourth rotating bodies 12a to 12d is similar to the structure configured to couple both end portions of each of the rotation auxiliary coupling members 17a to 17c to the first to fourth rotating bodies 12a to 12d in the rotation transmission mechanism 11, and hence a description thereof will be omitted.

In the initial state shown in Fig. 13, the coupling members 38a to 38c are attached to the first to fourth rotating bodies 12a to 12d along the axial direction. When the first rotating body 12a rotates from the initial state (clockwise as viewed from the axial other side of the first rotating body 12a in this case), each coupling member 38a of the first relative rotation regulating means 37a gradually extends while inclining, and the first rotating body 12a and the second rotating body 12b relatively rotate to reach the state shown in Fig. 14. When the first rotating body 12a rotates through a predetermined angle and each coupling member 38a extends to the limit, the first rotating body 12a and the second rotating body 12b start to integrally rotate. Subsequently, in the same manner, owing to the action of the second and third relative rotation regulating means 37b and 37c, the third and fourth rotating bodies 12c and 12d sequentially start to rotate with delays. Finally, the first to fourth rotating bodies 12a to 12d integrally rotate to transmit rotation from the first rotating body 12a to the fourth rotating body 12d.

Note that the coupling members 38a to 38c of the first to third relative rotation regulating means 37a to 37c also function as the rotation auxiliary coupling members 17a to 17c of the rotation transmission mechanism 11. Accordingly, when the coupling members 38a to 38c restore (contract) to the initial state (see Fig. 13) at the end of the operation, the first to third rotating bodies 12a to 12c and the second to fourth rotating bodies 12b to 12d relatively rotate to automatically return to the positional relationship in the initial state, thereby allowing preparations for the start of the next operation.

Accordingly, the rotation transmission coupling 35 and the rotation transmission mechanism 36 can obtain actions and effects similar to those of the rotation transmission coupling 10 and the rotation transmission mechanism 11. Note that the spring constants of the coil springs used for the coupling members 38a to 38c may be the same or different for each of the first to third relative rotation regulating means.

In this embodiment, as the first to third relative rotation regulating means, four coupling members are disposed at equal angular intervals (90 degrees) in the circumferential direction. However, the number and locations of the coupling members of each relative rotation regulating means can be selected as appropriate. Note that the numbers and locations of the coupling members of the respective relative rotation regulating means may be the same or different. In addition, the coupling members of the adjacent relative rotation regulating means are preferably disposed so as to be shifted in phase from each other in the circumferential direction in the initial state. In this embodiment, they are disposed so as to be shifted in phase from each other by 45 degrees. This phase difference can be selected as appropriate in accordance with the number of rotating bodies and the number of the coupling members of each relative rotation regulating means. All the phase differences need not be uniform (the same). In addition, the coupling members of the adjacent relative rotation regulating means may be disposed coaxially without any phase shift. This embodiment uses coil springs having elasticity and flexibility as coupling members. However, coupling members to be used may be any members having elasticity and/or flexibility and functioning as relative rotation regulating means. For example, it is possible to use a rod spring that has flexibility and deforms so as to twist accompanying the relative rotation of adjacent rotating bodies. In addition, a support shaft that supports the first to fourth rotating bodies so as allow them to reciprocally rotate and supports them so as to allow them to slide in the axial direction. In this case, the fitting concave portions and the fitting convex portions of the respective rotating bodies may be omitted.

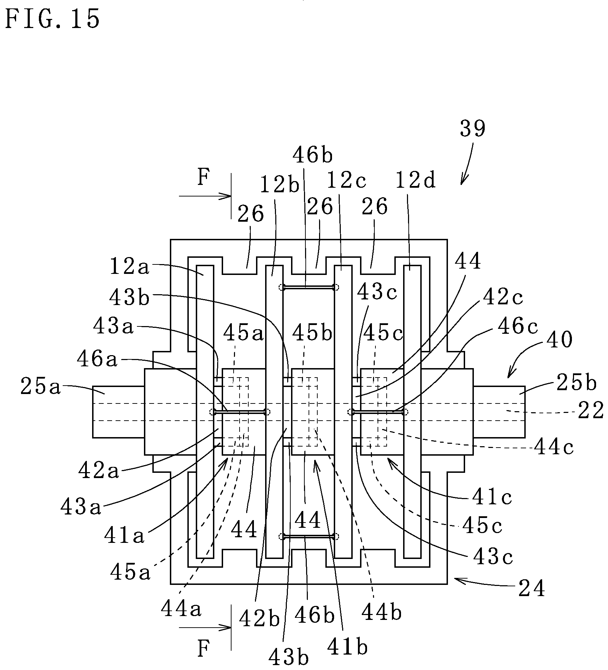

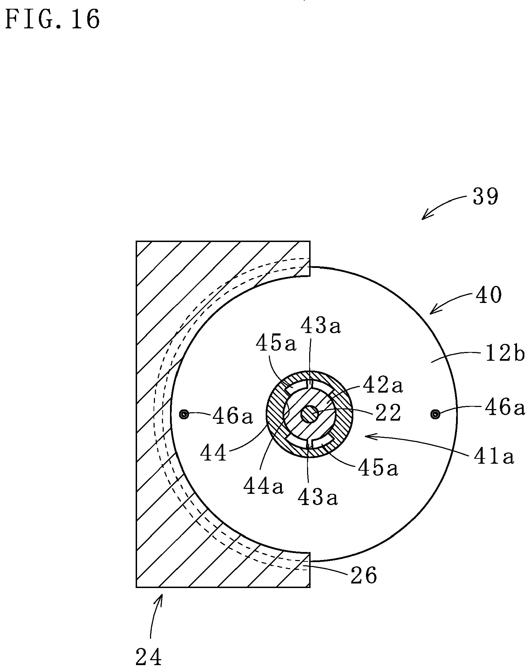

A rotation transmission coupling 39 according to the third embodiment of the present invention and a rotation transmission mechanism 40 used therefor will be described next with reference to Figs. 15 and 16. Note that the same reference numerals and symbols denote parts similar to those in the second embodiment, and a description thereof will be omitted.

The rotation transmission mechanism 40 used for the rotation transmission coupling 39 shown in Figs. 15 and 16 differs from the rotation transmission mechanism 11 in that first to third relative rotation regulating means 41a to 41c include, instead of the engaging shafts and the engaging hole portions, rotating shafts 42a to 42c each protruding to the axial one side of a corresponding one of first to third rotating bodies 12a to 12c, two each of projection portions 43a to 43c formed on the outer peripheries of the rotating shafts 42a to 42c, shaft insertion portions 44a to 44c which are formed in the axial centers of shaft portions 44 each protruding to the axial other side of a corresponding one of second to fourth rotating bodies 12b to 12d and in which the rotating shafts 42a to 42c are loosely fitted, and two each of rotation regulating concave portions 45a to 45c which are formed in notch shapes in the outer peripheries of the shaft insertion portions 44a to 44c and engaged with the projection portions 43a to 43c so as to regulate the rotatable ranges of the projection portions 43a to 43c, and does not include any fitting concave portions and fitting convex portions.

The operation of the rotation transmission mechanism 40 will be described below.

When the first rotating body 12a rotates (clockwise as viewed from the axial other side of the first rotating body 12a in this case) from the initial state in Figs. 15 and 16, the projection portion 43a provided on the outer periphery of the rotating shaft 42a moves along the rotation regulating concave portion 45a in the circumferential direction, and the first rotating body 12a and the second rotating body 12b relatively rotate. Each projection portion 43a of the first relative rotation regulating means 41a comes into contact with an end portion of the rotation regulating concave portion 45a on the side in the traveling direction to regulate relative rotation, and the first rotating body 12a and the second rotating body 12b start to integrally rotate. Subsequently, in the same manner, owing to the actions of the second and third relative rotation regulating means 41b and 41c (the projection portions 43b and 43c and the rotation regulating concave portions 45b and 45c), the third and fourth rotating bodies 12c and 12d sequentially start to rotate with delays. Finally, the first to fourth rotating bodies 12a to 12d integrally rotate to transmit rotation from the first rotating body 12a to the fourth rotating body 12d.

Note that the rotation transmission mechanism 40 includes a plurality (two each in this case) of rotation auxiliary coupling members 46a to 46c using rod springs having flexibility instead of the coil springs. At the start of an operation, the rotation auxiliary coupling members 46a to 46c are subjected to twisting (an example of deformation) from the initial state accompanying the relative rotation of the first to third rotating bodies 12a to 12c and the second to fourth rotating bodies 12b to 12d from the initial state. At the end of the operation, the rotation transmission mechanism 40 restores from the initial state (see Fig. 15) to relatively rotate the first to third rotating bodies 12a to 12c and the second to fourth rotating bodies 12b to 12d to make them return to the positional relationship in the initial state. Like the rotation auxiliary coupling members 17a to 17c, the rotation auxiliary coupling members 46a to 46c each have both end portions formed as spherical universal couplings, which smoothly change in angle accompanying with twisting, thereby reducing the load. Although the rotation auxiliary coupling members 46a to 46c do not extend or contract, the first to fourth rotating bodies 12a to 12d can slide in the axial direction. Accordingly, the axial positions of the first to fourth rotating bodies 12a to 12d (the intervals between the adjacent rotating bodies) can be adjusted following the twisting of the rotation auxiliary coupling members 46a to 46c. This makes it possible to stably perform a rotation transmission operation.

Therefore, the rotation transmission coupling 39 and the rotation transmission mechanism 40 can obtain actions and effects similar to those of the rotation transmission coupling 10 and the rotation transmission mechanism 11.

This embodiment includes, as the first to third relative rotation regulating means 41a to 41c, the rotating shafts 42a to 42c and the projection portions 43a to 43c respectively provided on the first to third rotating bodies 12a to 12c each on the axial one side and the shaft insertion portions 44a to 44c and the rotation regulating concave portions 45a to 45c respectively provided on the second to fourth rotating bodies 12b to 12d each on the axial other side. However, the positional relationships between these parts may be interchanged.

In this embodiment, as the first to third relative rotation regulating means 41a to 41c, two each of the projection portions 43a to 43c and two each of the rotation regulating concave portions 45a to 45c are arranged at equal angular intervals (180 degrees). However, the numbers and locations of projection portions and rotation regulating concave portions of each relative rotation regulating means can be selected as appropriate. In this case, the movable range of each projection portion (the relative rotational angle regulated by the rotation regulating concave portion) can also be selected as appropriate.

Furthermore, the number of rotation auxiliary coupling members can be selected as appropriate. Although the rotation auxiliary coupling members are preferably disposed at equal angular intervals, they may not be disposed at equal angular intervals. Note that as rotation auxiliary coupling members, coil springs like those of the rotation transmission mechanism 11 can be used. In addition, the support shaft may be omitted.

A modification of the rotation transmission coupling (rotation transmission mechanism) will be described next. Note that the same reference numerals and symbols denote parts similar to those in the third embodiment, and a description thereof will be omitted.

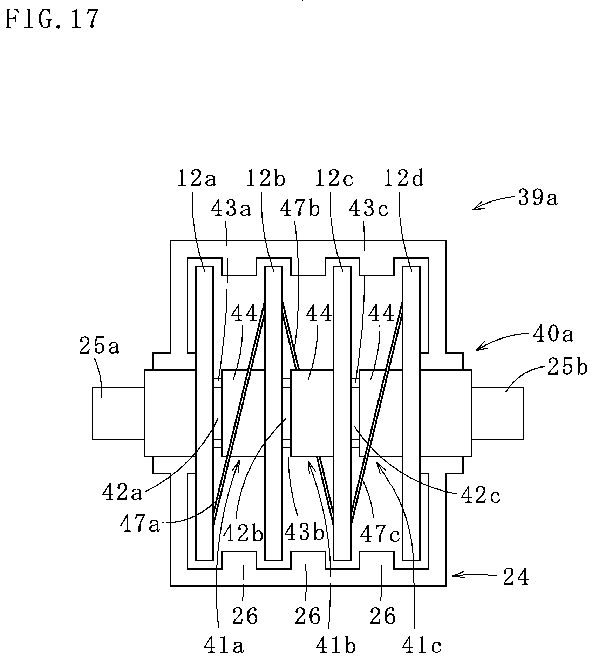

A rotation transmission mechanism 40a used for a rotation transmission coupling 39a according to the modification shown in Fig. 17 differs from the rotation transmission mechanism 40 in that rotation auxiliary coupling members 47a to 47c are attached to the rotation transmission mechanism so as to be curved into a coil shape. The rotation auxiliary coupling members 47a to 47c elastically deform in the diameter reducing direction as the first to third rotating bodies 12a to 12c relatively rotate clockwise as viewed from the second to fourth rotating bodies 12b to 12d when the rotation transmission mechanism 40a is seen from the axial other side, whereas the rotation auxiliary coupling members 47a to 47c elastically deform in the diameter increasing direction as the first to third rotating bodies 12a to 12c relatively rotate counterclockwise as viewed from the second to fourth rotating bodies 12b to 12d. Accordingly, regardless of the rotating direction of the first to third rotating bodies 12a to 12c at the start of an operation, making the rotation auxiliary coupling members 47a to 47c restore to the initial state at the end of the operation can make the first to third rotating bodies 12a to 12c and the second to fourth rotating bodies 12b to 12d relatively rotate and return to the positional relationship in the initial state. Note that the length of each rotation auxiliary coupling member can be selected as appropriate. In addition, the winding direction of each rotation auxiliary coupling member may be clockwise or counterclockwise.

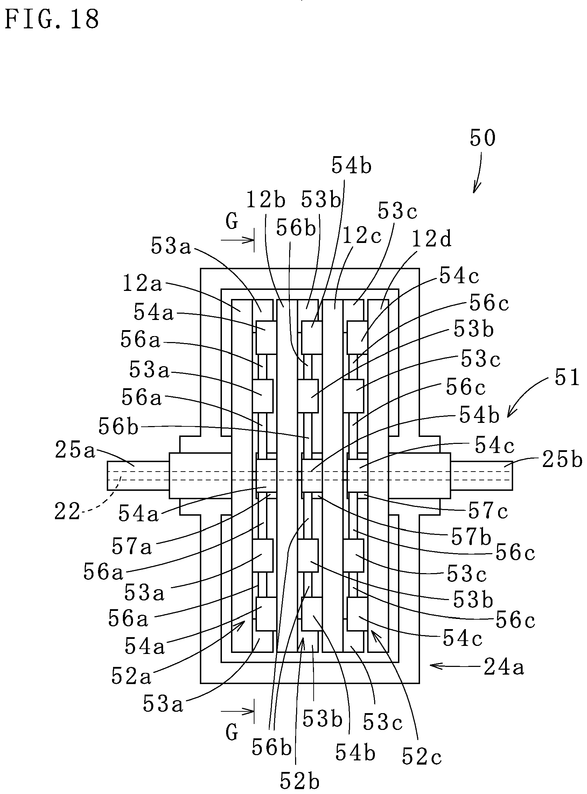

A rotation transmission coupling 50 according to the fourth embodiment of the present invention and a rotation transmission mechanism 51 used therefor will be described next with reference to Figs. 18 to 20. Note that the same reference numerals and symbols denote parts similar to those in the first to third embodiments, and a description thereof will be omitted.

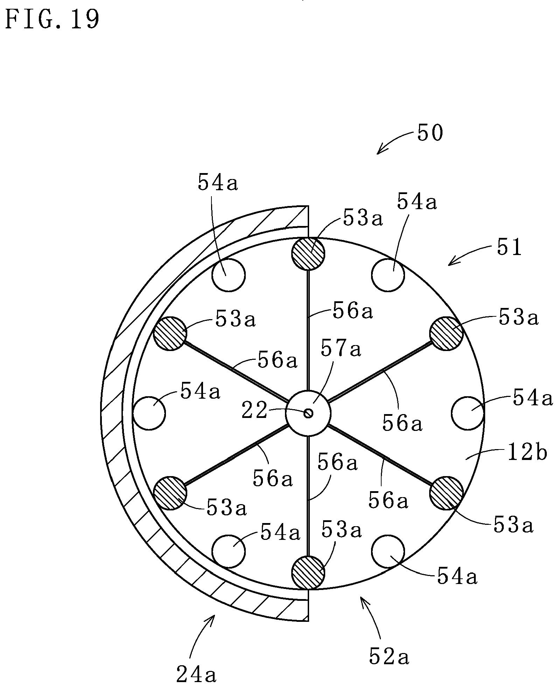

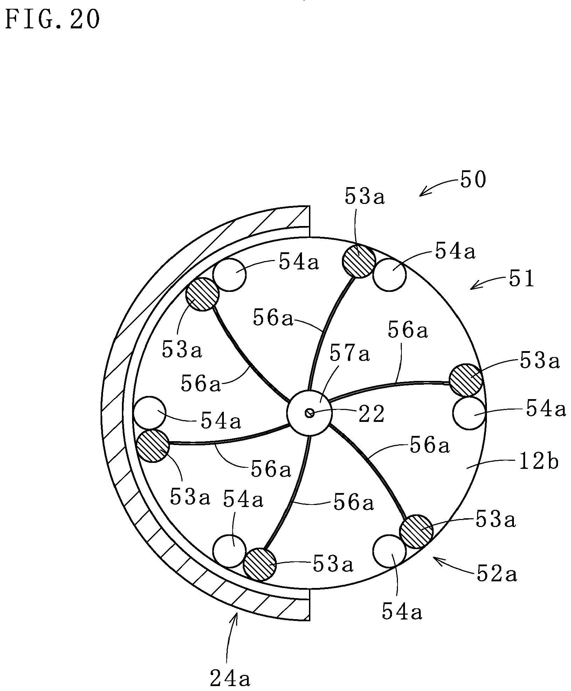

The rotation transmission mechanism 51 used for the rotation transmission coupling 50 shown in Figs. 18 to 20 includes, as first to third relative rotation regulating means 52a to 52c, drive-side projections 53a to 53c each protruding to the axial one side of a corresponding one of first to third rotating bodies 12a to 12c and driven-side projections 54a to 54c each protruding to the axial other side of a corresponding one of second to fourth rotating bodies 12b to 12d. While the first to third rotating bodies 12a to 12c and the second to fourth rotating bodies 12b to 12d relatively rotate, the drive-side projections 53a to 53c come into contact with the driven-side projections 54a to 54c, thereby regulating the relative rotation amount. The rotation transmission mechanism 51 includes rotation auxiliary coupling members 56a to 56c using leaf springs that have flexibility and couple each of the drive-side projections 53a to 53c of the first to third rotating bodies 12a to 12c to the axial center side of the axial other side of a corresponding one of the second to fourth rotating bodies 12b to 12d. At the start of an operation, the leaf springs are subjected to curving (an example of deformation) from the initial state (see Figs. 18 and 19) accompanying the relative rotation of the first to third rotating bodies 12a to 12c and the second to fourth rotating bodies 12b to 12d (see Fig. 20). At the end of the operation, the leaf springs restore to the initial state to make the first to third rotating bodies 12a to 12c and the second to fourth rotating bodies 12b to 12d relatively rotate and return to the positional relationship in the initial state. In this case, the distal end sides of the rotation auxiliary coupling members 56a to 56c are fixed to the drive-side projections 53a to 53c, and the proximal end sides of the rotation auxiliary coupling members 56a to 56c are fixed to the outer peripheries of central projections 57a to 57c each formed on the axial center of the axial other side of a corresponding one of the second to fourth rotating bodies 12b to 12d, thereby radially disposing the rotation auxiliary coupling members 56a to 56c.

The operation of the rotation transmission mechanism 40 will be described below.

When the first rotating body 12a rotates from the initial state in Figs. 18 and 19 (clockwise as viewed from the axial other side of the first rotating body 12a in this case), each drive-side projection 53a moves in the circumferential direction, the rotation auxiliary coupling member 56a curves between each drive-side projection 53a and the central projection 57a, and the first rotating body 12a and the second rotating body 12b relatively rotate. When each drive-side projection 53a comes into contact with a corresponding one of the driven-side projections 54a to 54c of the first relative rotation regulating means 52a to regulate the relative rotation, the first rotating body 12a and the second rotating body 12b start to integrally rotate. Subsequently, in the same manner, owing to the action of the second and third relative rotation regulating means 52b and 52c (the drive-side projections 53b and 53c and the driven-side projections 54b and 54c), the third and fourth rotating bodies 12c and 12d sequentially start to rotate with delays to transmit rotation from the first rotating body 12a to the fourth rotating body 12d. At the end of the operation, the rotation auxiliary coupling members 56a to 56c restore to the initial state (see Fig. 19) to enable the first to third rotating bodies 12a to 12c and the second to fourth rotating bodies 12b to 12d relatively rotate and return to the positional relationship in the initial state.

Accordingly, the rotation transmission coupling 50 and the rotation transmission mechanism 51 can obtain actions and effects similar to those of the rotation transmission coupling 10 and the rotation transmission mechanism 11. In addition, radially disposing the rotation auxiliary coupling members 56a to 56c that couple the adjacent rotating bodies in the radial direction can bring the adjacent rotating bodies close to each other and shorten the axial dimensions, thereby reducing the sizes and weights of the rotation transmission coupling 50 and the rotation transmission mechanism 51. In addition, as compared with the first to third embodiments, the fourth embodiment can increase the number of rotating bodies while suppressing increases in axial dimensions and increase the output while greatly reducing the load at the time of startup.

In this embodiment, as the first to third relative rotation regulating means 52a to 52c, six pairs of each of the drive-side projections 53a to 53c and each of the driven-side projections 54a to 54c are disposed at equal angular (60 degrees) intervals. However, the numbers of drive-side projections and driven-side projections of each relative rotation regulating means can be selected as appropriate. For example, each relative rotation regulating means may include only one pair of a drive-side projection and a driven-side projection. When each relative rotation regulating means includes only two or more pairs of drive-side projections and driven-side projections, these projections may not be disposed at equal angular intervals. In addition, instead of alternately disposing drive-side projections and driven-side projections, driven-side projections may be disposed one by one on both sides of each drive-side projection (on the traveling direction side at the time of clockwise rotation and on the traveling direction side at the time of counterclockwise rotation) so as to form relative rotation regulating means each having one drive-side projection and two driven-side projection as one pair. Note that the shapes and sizes of drive-side projections and driven-side projections can be selected as appropriate. In this embodiment, the drive-side projections and the driven-side projections of the adjacent relative rotation regulating means are disposed coaxially in the initial state. However, they may be disposed so as to be shifted in phase in the circumferential direction. The phase differences can be selected as appropriate, and all the phase differences need not be uniform (the same). Note that the numbers and locations of drive-side projections and driven-side projections of the adjacent relative rotation regulating means may be the same or different.

The number and locations of rotation auxiliary coupling members can be selected in accordance with the number and locations of drive-side projections. In addition, this embodiment uses leaf springs having flexibility as rotation auxiliary coupling members. However, any members can be used as rotation auxiliary coupling members as long as they can make the first to third rotating bodies and the second to fourth rotating bodies relatively rotate and return to the positional relationship in the initial state at the end of the operation. Coil springs having elasticity and flexibility can also be used as rotation auxiliary coupling members. Although this embodiment uses the structure configured to support (couple) all the rotating bodies 12a to 12d with the support shaft 22, the embodiment may use a structure configured to couple the adjacent rotating bodies with fitting concave portions and fitting convex portions so as to allow the rotating bodies to relatively rotate and slide in the axial direction like the rotation transmission mechanism 11 or a structure configured to couple the adjacent rotating bodies with only fitting concave portions and fitting convex portions without using any support shaft. In the embodiment, the casing 24 is formed in a substantially cylindrical shape, and the rotating bodies are brought close to each other by omitting the inner ridge portions. However, the drive-side projections and the driven-side projections may be disposed inside each rotating body in the radial direction, and ridge portions may be provided between the adjacent rotating bodies inside the casing.

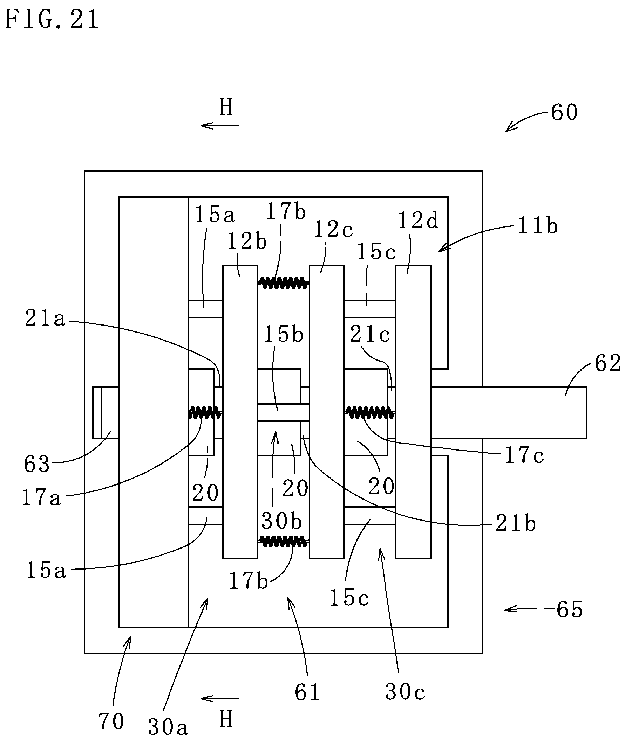

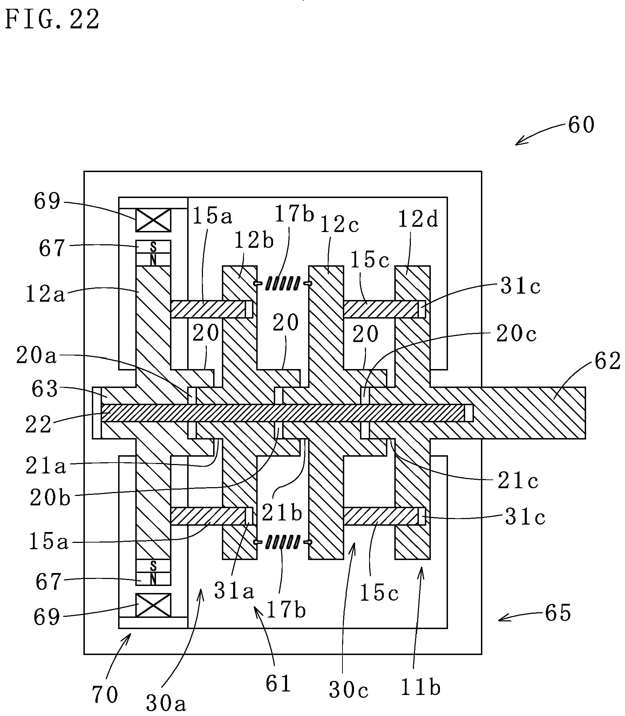

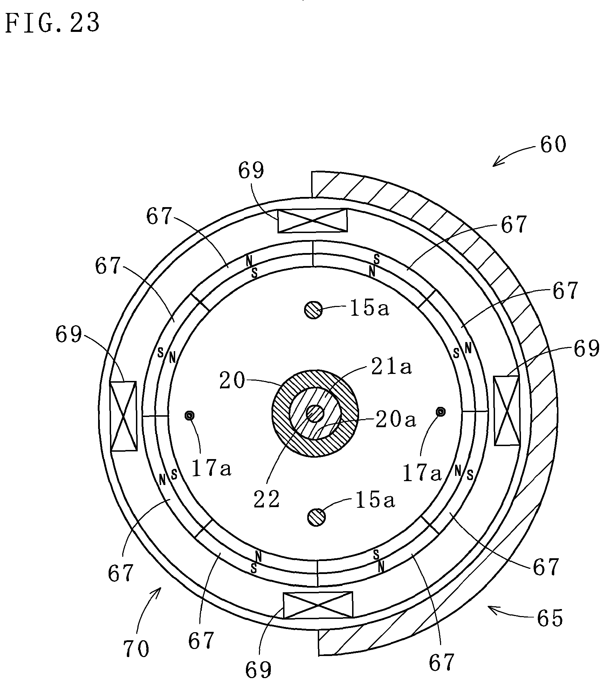

A motor 60 according to a fifth embodiment of the present invention will be described next with reference to Figs. 21 to 23. Note that the same reference numerals and symbols denote parts similar to those in the first embodiment, and a description thereof will be omitted.

As shown in Figs. 21 to 23, the motor 60 has a rotor 61 including a rotation transmission mechanism 11b. The motor 60 transmits rotation from a first rotating body 12a to a fourth rotating body 12d and outputs the rotation from an output shaft 62b coupled to the fourth rotating body 12d. The rotor 61 also has an end portion support shaft 63 coupled to the other end side of the first rotating body 12a. The rotor 61 is accommodated in the interior of a casing 65, and the output shaft 62 and the end portion support shaft 63 are supported by the casing 65 so as to be reciprocally rotatable.

A plurality (eight in this case) of permanent magnets 67 are attached to the outer periphery of the first rotating body 12a such that the magnetic poles (N poles and S poles) are alternately arranged, and a stator 70 having a plurality (four in this case) of coil portions 69 arranged at intervals is attached to the outer peripheries of the permanent magnets (the inner periphery of the casing 65). In a usual motor, the entire rotor integrally rotates. In contrast, in the motor 60 incorporating the rotor 61 including the rotation transmission mechanism 11b, as described above, after only the first rotating body 12a rotates at the time of startup, the second to fourth rotating bodies 12b to 12d sequentially start to rotate with delays. Finally, the first to fourth rotating bodies 12a to 12d integrally rotate to transmit rotation from the first rotating body 12a to the fourth rotating body 12d. This can greatly reduce the load at the time of startup of the motor 60 and obtain large output in spite of being small in size.

This embodiment uses the rotor 61 including the rotation transmission mechanism 11b. However, the rotor may include any one of the other rotation transmission mechanisms 11, 11a, 11c, 11d, 36, 40, 40a, and 51 described above. Note that the embodiment uses the structure in which the permanent magnets 67 are disposed on the rotor 61 (first rotating body 12a) side, and the coil portions 69 are disposed on the stator 70 side. However, the embodiment may use a structure in which the coil portions are disposed on the rotor side, and the permanent magnets are disposed on the stator side. In addition, the numbers of permanent magnets and coil portions can be selected as appropriate.

The configuration shown in Figs. 21 to 23 can also be used as an electrical generator. In this case, rotation is input to a shaft coupled to the fourth rotating body 12d as an input shaft, and the rotation is transmitted from the fourth rotating body 12d to the first rotating body 12a, thereby generating electricity. This makes it possible to extract current from the coil portions 69. Since only the fourth rotating body 12d rotates at the time of startup, the load at the time of startup can be greatly reduced. The kinetic energy is increased while the rotation is transmitted from the fourth rotating body 12d to the first rotating body 12a, and large output (electric energy) can be extracted. This makes it possible to obtain high power generation efficiency.

Although embodiments of the present invention have been described above, the present invention is not limited to the above embodiments and includes other embodiments and modifications that are conceivable within the scope of matters described in the claims. All changes in conditions within the gist of the present invention fall within the application range of the present invention. In addition, the present invention is also applied to a case in which various elements of the rotation transmission mechanisms according to the respective embodiments are combined to form a rotation transmission mechanism.

A metal such as stainless steel is suitably used for components, out of the components constituting the rotation transmission coupling and the rotation transmission mechanism, for which any specific material is designated. However, various types of materials can be selected as appropriate in accordance with the applications of the rotation transmission coupling and the rotation transmission mechanism and the magnitude of driving force (torque). For example, a synthetic resin (including reinforced plastic), wood, or hard rubber can also be used. Note that these materials may be used singly or in combination for each component.

In each embodiment described above, the first to fourth rotating bodies are disposed in series coaxially. The number of rotating bodies to be disposed in series may be two or more (the first to n-th rotating bodies (n rotating bodies, where n is an integer equal to or more than two) and can be selected as appropriate. The number (n - 1) of relative rotation regulating means the couple between the adjacent rotating bodies changes in accordance with the total number of rotating bodies. In addition, the diameters and thicknesses of the respective rotating bodies used in one rotation transmission mechanism may be the same or different. For example, it is possible to considerably reduce the load at the time of startup by disposing the rotating bodies so as to gradually increase the weights (diameters and/or thicknesses) of the rotating bodies from the input side to the output side of the rotation transmission mechanism. Especially when such a rotation transmission mechanism is used as a rotation transmission coupling and a motor, excellent acceleration performance can be obtained. Alternatively, when the rotating bodies are disposed so as to gradually reduce the weights (diameters and/or thicknesses) of the rotating bodies from the input side to the output side of the rotation transmission mechanism, the effect of reducing the load at the time of startup decreases. However, when external force (load) that hinders rotation is applied from the output side, the force is not easily transmitted to the input side. Especially when such a rotation transmission mechanism is used as a rotation transmission coupling and a motor, the influence of load variations from the outside can be reduced, and the durability and the operation stability can be improved. Although the basic shape of a rotating body is a disk shape, the weight of the rotating body may be adjusted by forming concave/convex portions (thin-walled portions/thick-walled portions) on one surface and/or the other surface or forming cuts (grooves) or notches in necessary portions. Alternatively, the weight of each rotating body can be adjusted by changing the material for each rotating body.

In the above embodiment, there is a case in which the fitting concave portions are each formed in the axial center of the shaft portion protruding to the axial one side of a corresponding one of the first to third rotating bodies, and the fitting convex portions are each formed on the axial other side of a corresponding one of the second to fourth rotating bodies. However, the positional relationship between the shaft portion having the fitting concave portion and the fitting convex portion may be interchanged. Likewise, in the above embodiment, there is a case in which the rotating shaft and the projection portion are formed on the axial one side of each of the first to third rotating bodies, and the shaft insertion portion and the rotation regulating concave portion are formed in the axial center of the shaft portion protruding to the axial other side of each of the second to fourth rotating bodies. However, the positional relationship between the rotating shaft having the projection portion and the shaft portion having the rotation regulating concave portion can be interchanged. In the above embodiment, the fitting concave portion is formed in the shaft portion protruding to the axial one side of each rotating body, and the shaft insertion portion and the rotation regulating concave portion are formed in the shaft portion protruding to the axial other side of each rotating body. However, the overall rotating body may be formed thick, and the shaft portion may be omitted. In addition, the above embodiment has exemplified the case in which the first rotating body is regarded as the input side, and the fourth rotating body is regarded as the output side. However, the input side and the output side may be interchanged. Accordingly, the rotation transmission coupling can connect the connection shaft of the output portion to the first outer coupling shaft, and the drive shaft of the input portion can be connected to the second outer coupling shaft.

The above embodiment has exemplified the case in which the drive shaft of the input portion is directly connected to the first outer coupling shaft, and the connection shaft of the output portion is directly connected to the second outer coupling shaft. The embodiment may include one or both of an input-side auxiliary rotation transmission portion that connects between the drive shaft and the first outer coupling shaft and elastically deforms upon rotation of the drive shaft to transmit the rotation of the drive shaft to the first outer coupling shaft with a delay and an output-side auxiliary rotation transmission portion that connects between the second outer coupling shaft and the connection shaft and elastically deforms upon rotation of the second outer coupling shaft to transmit the rotation of the second outer coupling shaft to the connection shaft with a delay. As the input-side auxiliary rotation transmission portion and the output-side auxiliary rotation transmission portion, coil springs, spiral springs, or the like can be suitably used. These springs elastically deform so as to decrease in diameter accompanying rotation and automatically restore (increase in diameter) to the initial state when the deformation reaches its limit, thereby transmitting the rotation. Note that the input-side auxiliary rotation transmission portion and the output-side auxiliary rotation transmission portion are not limited to these, and it is possible to use anything that can transmit rotation by automatically restoring to the initial state after elastic deformation accompanying the rotation. Assume, for example, that a plurality of leaf springs or rod springs are radially arranged. In this case, when these springs are made to elastically deform so as to twist accompanying rotation, the rotation can be transmitted at the time of the restoration of the springs. Providing the embodiment with an input-side auxiliary rotation transmission portion can further reduce the load applied to the input portion such as a motor and effectively prevent the input portion from being broken. In addition, providing the embodiment with an output-side auxiliary rotation transmission portion can continuously obtain stable output by accumulating input rotational energy in the output-side auxiliary rotation transmission portion, thereby further improving rotating operation stability.

Note that the shape of the rotation transmission coupling accommodating the rotation transmission mechanism and the shape of the casing of the motor can be selected as appropriate. In the casing, bearings for axially supporting the rotation transmission mechanism can be arranged as appropriate. In order to stabilize the rotation of the rotating body, bearings may be attached to the outer periphery of the rotating body so as to make the inner periphery of the casing directly rotatably support the rotating body. Alternatively, the outer periphery of the rotating body may be supported by rotatable spheres embedded along the inner periphery of the casing instead of the bearings.

### Industrial Applicability

A drive source such as a motor, a manual rotating handle, or the like serving as an input portion is coupled to a driven body such as a rotating body such as a propeller or screw or any type of motorized rotating equipment serving as an output portion through a rotation transmission mechanism. This makes it possible to drive, for example, a large rotating body or rotating equipment even with small input energy at the time of startup. This can reduce the size of the motor or the like as a drive source and contribute to energy saving. In addition, the loads of the rotation transmission coupling, the motor, and the electrical generator, each incorporating this rotation transmission mechanism, at the time of startup are reduced. This makes it possible to improve the operation stability and rotational energy transmission efficiency and increase the output.

### Reference Signs List

10, 10a, 10b, 10c, 10d: rotation transmission coupling; 11, 11a, 11b 11c, 11d: rotation transmission mechanism, 12a to 12d: first to fourth rotating bodies, 13a to 13c: first to third relative rotation regulating means, 15a to 15c: engaging shafts, 16a to 16c: engaging hole portions: 17a to 17c: rotation auxiliary coupling members, 18a: universal coupling, 18b: fitted portion, 19a, 19b: guard portion, 20: shaft portion, 20a to 20c: fitting concave portions, 21a to 21c: fitting convex portions, 22: support shaft, 24, 24a: casing, 25a: first outer coupling shaft, 25b: second outer coupling shaft, 26: ridge portion, 27a to 27c: first to third relative rotation regulating means, 28a to 28c: large-diameter portions, 29a to 29c: large-diameter engaging portions, 30a to 30c: first to third relative rotation regulating means, 31a to 31c: engaging concave portions, 32a to 32c, 33a to 33c: coupling projections, 34a to 34c: rotation auxiliary elastic members, 35: rotation transmission coupling, 36: rotation transmission mechanism, 37a to 37c: first to third relative rotation regulating means, 38a to 38c: coupling members, 39, 39a: rotation transmission coupling, 40, 40a: rotation transmission mechanism, 41a to 41c: first to third relative rotation regulating means, 42a to 42c: rotating shafts, 43a to 43c: projection portions, 44: shaft portion, 44a to 44c: shaft insertion portions, 45a to 45c: rotation regulating concave portions, 46a to 46c: rotation auxiliary coupling members, 47a to 47c: rotation auxiliary coupling members, 50: rotation transmission coupling, 51: rotation transmission mechanism, 52a to 52c: first to third relative rotation regulating means, 53a to 53c: drive-side projections, 54a to 54c: driven-side projections, 56a to 56c: rotation auxiliary coupling members, 57a to 57c: central projections, 60: motor, 61: rotor, 62: output shaft, 63: end portion support shaft, 65: casing, 67: permanent magnet, 69: coil portion, 70: stator

## Claims

1. A rotation transmission mechanism **characterized in that** first to n-th rotating bodies are coaxially and sequentially disposed, relative rotation amounts of adjacent rotating bodies are regulated by first to (n - 1)th relative rotation regulating means, the first to n-th rotating bodies sequentially start to rotate with delays at a start of operation, the first to n-th rotating bodies integrally rotate finally, and rotation is transmitted from the first rotating body to the n-th rotating body, where n is an integer not less than two.

2. The rotation transmission mechanism according to claim 1, **characterized in that** the i-th relative rotation regulating means has elasticity and/or flexibility and includes a plurality of coupling members that couple an axial one side of the i-th rotating body to an axial other side of the (i + 1)th rotating body, and both end portions of each of the coupling members are located on circumferences with the same diameter respectively centered on axial centers of the i-th rotating body and the (i + 1)th rotating body, where i is an integer of 1 to n - 1.

3. The rotation transmission mechanism according to claim 1, **characterized in that** the i-th relative rotation regulating means includes an engaging shaft protruding to an axial one side of the i-th rotating body and an engaging concave portion which opens to an axial other side of the (i + 1)th rotating body and curves in an arc shape centered on a axial center of the (i + 1)th rotating body and through which the engaging shaft is inserted, where i is an integer of 1 to n - 1.

4. The rotation transmission mechanism according to claim 3, **characterized by** further comprising rotation auxiliary elastic members which are respectively accommodated in one side and the other side of the engaging concave portion of the (i + 1)th rotating body in a circumferential direction, are compressed accompanying relative rotation of the i-th rotating body and the (i + 1)th rotating body, and make the i-th rotating body and the (i + 1)th rotating body relatively rotate and return to a positional relationship in an initial state with repulsive force at an end of an operation.

5. The rotation transmission mechanism according to claim 1, **characterized in that** the i-th relative rotation regulating means includes a rotating shaft protruding to an axial one side of the i-th rotating body, a projection portion formed on an outer periphery of the rotating shaft, a shaft insertion portion which is formed on an axial other side of the (i + 1)th rotating body and in which the rotating shaft is loosely fitted, and a rotation regulating concave portion which is formed in a notch shape in an outer periphery of the shaft insertion portion and engages with the projection portion to regulate a rotatable range of the projection portion, where i is an integer of 1 to n - 1.

6. The rotation transmission mechanism according to claim 1, **characterized in that** the i-th relative rotation regulating means includes a drive-side projection protruding to an axial one side of the i-th rotating body and a driven-side projection protruding to an axial other side of the (i + 1)th rotating body and regulates a relative rotation amount by causing the drive-side projection to come into contact with the driven-side projection while the i-th rotating body and the (i + 1)th rotating body relatively rotate, where i is an integer of 1 to n - 1.

7. The rotation transmission mechanism according to any one of claims 1 to 6, **characterized in that** the i-th rotating body and the (i + 1)th rotating body are coupled to each other so as to be relatively rotatable and slidable in an axial direction by, in addition to the 1 to (n - 1)th relative rotation regulating means, fitting between a fitting convex portion or a fitting concave portion formed on a axial center on an axial one side of the i-th rotating body and a fitting concave portion or a fitting convex portion formed on a axial center on an axial other side of the (i + 1)th rotating body, where i is an integer of 1 to n - 1.

8. The rotation transmission mechanism according to any one of claims 1 to 7, **characterized by** further comprising a support shaft which penetrates through axial centers of the first to n-th rotating bodies and supports the first to n-th rotating bodies so as to make the first to n-th rotating bodies reciprocally rotatable and slidable in an axial direction.

9. A rotation transmission coupling that couples between an input portion and an output portion and transmits rotation input from the input portion to the output portion, **characterized by** comprising a rotation transmission mechanism defined in any one of claims 1 to 8, a casing incorporating the rotation transmission mechanism, a first outer coupling shaft coupled to an axial other side of the first rotating body, reciprocally rotatably supported by the casing, and detachably connected to a drive shaft of the input portion, and a second outer coupling shaft coupled to an axial one side of the n-th rotating body, reciprocally rotatably supported by the casing, and detachably connected to a connection shaft of the output portion.

10. The rotation transmission coupling according to claim 9, **characterized by** further comprising one or both of an input-side auxiliary rotation transmission portion which connects between the drive shaft and the first outer coupling shaft and elastically deforms upon rotation of the drive shaft to transmit the rotation of the drive shaft to the first outer coupling shaft with a delay and an output-side auxiliary rotation transmission portion which connects between the second outer coupling shaft and the connection shaft and elastically deforms upon rotation of the second outer coupling shaft to transmit the rotation of the second outer shaft to the connection shaft with a delay.

11. A motor **characterized by** comprising a rotor including a rotation transmission mechanism defined in any one of claims 1 to 8, the motor transmitting rotation from the first rotating body or the n-th rotating body to the n-th rotating body or the first rotating body and outputting the rotation from an output shaft coupled to the n-th rotating body or the first rotating body.

12. An electrical generator **characterized by** comprising a rotor including a rotation transmission mechanism defined in any one of claims 1 to 8, the electrical generator generating electricity by inputting rotation from an input shaft coupled to the first or n-th rotating body and transmitting the rotation from the first or n-th rotating body to the n-th or first rotating body.
